# EUROPEAN PATENT APPLICATION

(11) **EP 4 501 700 A1**
(43) Date of publication of application: **05.02.2025**
(21) Application number: 23189082.3
(22) Date of filing: 01.08.2023
(51) Int. Cl.: B60L 53/302, B60L 53/16, B60L 53/18

(54) **CHARGING CABLE ASSEMBLY AND ELECTRIC VEHICLE CHARGING SYSTEM**

(71) Applicant: ABB E-mobility B.V., 2629 JG Delft (NL)
(72) Inventor: HERDZINA, Maciej, 31-580 Krakow (PL); BLASZCZYK, Pawel, 32-020 Wieliczka (PL)
(74) Representative: Zimmermann & Partner Patentanwälte mbB

(57) **Abstract**

The present disclosure provides a charging cable assembly 100 comprising an arm 130, a charging cable 110 attached to the arm 130, a charging connector 120 and a thermal management unit 140 configured for cooling the charging cable 110 and/or the charging connector 120 by circulating coolant through a plurality of coolant channels provided in the charging cable 110. The present disclosure further provides an electric vehicle charging system 300 comprising a charging station 320 having an EVSE 322, and a charging cable assembly 100 according to the present disclosure.

## Description

### TECHNICAL FIELD

Embodiments of the present disclosure relate to a charging cable assembly suitable for charging electric vehicles, and an electric vehicle charging system having said charging cable assembly. Particularly, embodiments of the present disclosure relate to a liquid-cooled charging cable assembly suitable for high current applications.

### BACKGROUND

Electrification of transport in general and private electrical vehicles have increased the demand for charging options. Particularly, the demand for faster charging options which reduce charging times, not just for personal electric vehicles but also for heavy-duty commercial electric vehicles, has introduced new challenges. One limiting factor in charging cables for electric vehicles is the heat that is generated when high currents flow through the cable and the electrical connector from the charging station to the battery of a vehicle. The heat may be actively conducted away from the heat sources using liquids.

European patent application no. EP 4 134 266 A1 describes an electric vehicle charging system according to the current state of the art, the system having a liquid-cooling system for cooling the charging cable and/or the charging connector. The electric vehicle charging system includes a charging station which houses thermal management unit comprising a vapour-compression refrigeration system. The liquid-cooled charging cable and/or charging connector allows for an electric vehicle to be charged with a higher electric current, without exceeding a temperature limit of the system.

However, with ever-increasing electric charging current, such as a charging current starting at 1500 A and extending up to 3000 A as used in the Megawatt Charging System (MCS) from ABB E-mobility, the limitations of liquid-cooled charging systems of the current state of the art become apparent. Such high charging currents generate more heat, requiring more efficient cooling solutions to operate without exceeding temperature limits. Further, it is desirable to maintain the size and weight of the charging cable and charging connector at manageable levels so that the charging system is easily operable by the user.

### SUMMARY

In view of the above challenges and problems arising in the state of the art, an improved electric vehicle charging system which is suitable for high current charging is sought.

According to a first aspect of the present disclosure, a charging cable assembly for charging an electric vehicle is provided. The charging cable assembly includes an arm, a charging cable having a first end and a second end, the charging cable comprising a plurality of conductors extending from the first end to the second end and a plurality of coolant channels extending from the first end to the second end, wherein the first end of the charging cable is connected to the arm, a charging connector provided at the second end of the charging cable, the charging connector being configured for electrically connecting the charging cable assembly to an electric vehicle, and a thermal management unit mounted on the arm, the thermal management unit being configured for cooling the charging cable and/or the charging connector by circulating coolant through the plurality of coolant channels.

According to a second aspect of the present disclosure, an electric vehicle charging system is provided. The electric vehicle charging system includes a charging station including an electric vehicle supply equipment (EVSE) apparatus, and a charging cable assembly according to the first aspect.

The aspects and embodiments of the present disclosure overcome the disadvantages in the current state of the art. By providing a shorter charging cable being supported by an arm, the liquid cooling circuit has a shorter fluid path which has reduced flow losses, allowing for more efficient cooling of the charging cable. Additionally, the shorter cable, i.e. shorter conductors, have a lower overall resistance compared to longer cables, and less heat is generated in the cable. Further, by locating the thermal management unit on the arm instead of within the charging station itself, the charging station can be more compact and simplified, and the components inside the charging station, such as the electric vehicle supply equipment (EVSE), are not subjected to additional heat load by the thermal management unit.

Further advantages of the charging cable assembly of the present disclosure include that the usability of the charging cable is improved, as the arm can be articulated to move the charging connector into the desired position easily, and the arm supports the weight of the heavy liquid-cooled cable. Additionally, the charging cable assembly provides further protection for the charging cable and charging connector, as the hanging cable may be prevented from laying on the ground when not in use, and damage by a vehicle is avoided.

Those skilled in the art will recognize additional features and advantages upon reading the following detailed description, and upon viewing the accompanying drawings.

### BRIEF DESCRIPTION OF THE DRAWINGS

The components in the figures are not necessarily to scale, instead emphasis being placed upon illustrating the principles of the invention. Moreover, in the figures, like reference numerals designate corresponding parts. In the drawings:
- Fig. 1: illustrates a schematic side view of a charging cable assembly according to embodiments of the present disclosure;
- Fig. 2: illustrates a cross-sectional view through section A-A of a charging cable assembly according to embodiments of the present disclosure; and
- Fig. 3: illustrates a perspective view of an electric vehicle charging system according to embodiments of the present disclosure.

### DETAILED DESCRIPTION

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment applies to a corresponding part or aspect in another embodiment as well.

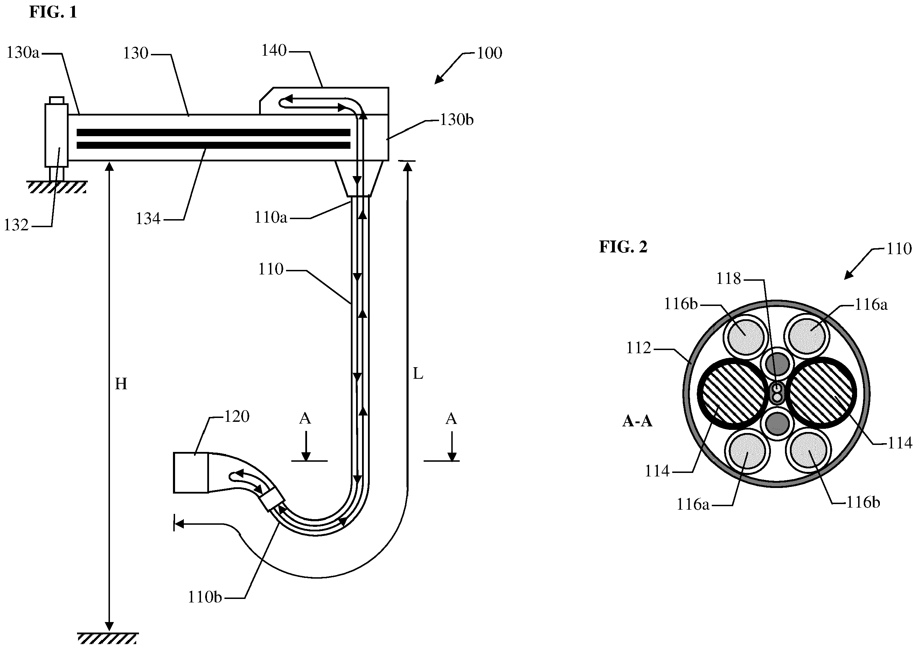

According to aspects and embodiments of the present disclosure, a charging cable assembly for charging an electric vehicle is provided. Reference will now be made to Fig. 1, which shows a side view of an exemplary charging cable assembly 100. The exemplary charging cable assembly 100 includes an arm 130 having a fixed end portion 130a and a free end portion 130b, and a charging cable 110 having a first end 110a and a second end 110b. The first end 110a of the charging cable 110 is exemplarily connected to the free end portion 130b of the arm 130 such that the charging cable 110 hangs from the arm 130.

In the context of the present disclosure, the term "fixed end portion" refers to the portion of the arm at which the arm is supported, and the term "free end portion" refers to the portion of the arm which is not supported. The "fixed end portion" may be supported such that the arm is mounted at the fixed end portion to restrict translation, but may be allowed to rotate in at least one degree of freedom. The term "portion" of the "fixed end portion" and the "free end portion" refers to the respective end portion of the arm, more particularly, the respective end 25% of the arm. In other words, the "fixed end portion" refers to the 25% of the arm at the end which is supported, while the "free end portion" refers to the 25% of the arm at the end which is not supported.

The charging cable 110 includes a plurality of conductors and a plurality of coolant channels extending from the first end 110a to the second end 110b. A cross-section of an example charging cable is shown in Fig. 2, which exemplarily shows an outer casing 112 of the charging cable and, within the outer casing 112, two conductors 114 for transmitting electrical current, particularly high-power DC current, to the electric vehicle and a plurality of coolant channels 116 running alongside the conductors 114. The charging cable 110 may further include other electrical lines or conductors, such as a communication lines 118 so that the electric vehicle attached to the charging cable assembly 100 may communicate with an electric vehicle charging system. The arrangement of coolant channels 116 is exemplarily shown as comprising four coolant channels 116 which form two separate circuits for coolant flow, whereby the outbound cooling channels 116a connect at the second end of the charging cable to the respective inbound cooling channels 116b to form each cooling circuit. However, the present disclosure is not limited to any specific arrangement of conductors and coolant channels, and may include any number of conductors, any number of coolant channels, and any configuration of cooling circuits therein.

The charging cable assembly 100 further includes a charging connector 120 provided at the second end 110b of the charging cable 110. The charging connector 120 is configured for electrically connecting the charging cable assembly 100 to an electric vehicle. The charging connector 120 may include a plurality of terminals, including terminals connected to the conductors 114 and optionally terminals connected to the communication lines 118. The charging connector 120 may further include coolant channels connected to the coolant channels 116 of the charging cable so that the charging connector 120 itself may also be cooled. The charging connector 120 may have a standard form, such as a Combined Charging System (CCS) Combo 1 or Combo 2 charging connector or an IEC 62196 Type 2 connector.

The charging cable assembly 100 further includes a thermal management unit 140 which is mounted on the arm 130. According to an embodiment, which may be combined with other embodiments described herein, the thermal management unit 140 is mounted at the free end portion 130b of the arm 130. Preferably, the thermal management unit 140 is on the top side of the arm 130 at the free end portion 130b of the arm 130. However, the present disclosure is not limited thereto, and the thermal management unit 140 may be mounted at any position on the arm 130. The thermal management unit 140 is connected to the plurality of coolant channels 116 of the charging cable 110 so as to cool the charging cable 110 and/or the charging connector 120 by circulating coolant through the plurality of coolant channels 116.

The thermal management unit 140 may include any suitable active liquid cooling device in the current state of the art. Preferably, the thermal management unit 140 includes a vapour-compression refrigeration system, otherwise known as a chiller. The chiller connects to the coolant channels 116 provided in the charging cable 110 to form a refrigeration cycle for cooling the charging cable 110. In the present disclosure, the terms "coolant" and "refrigerant" may be used interchangeably, meaning the liquid which is circulated through the coolant channels 116 to cool the charging cable 110 and/or the charging connector 120. The chiller may include typical components of a refrigeration system, including a compressor for compressing a refrigerant, an air-cooled heat exchanger for cooling the compressed refrigerant, an expansion valve for expanding the refrigerant, and a pump for circulating the refrigerant. These components are preferably contained within an enclosure to form a self-contained thermal management unit 140.

According to an embodiment, which may be combined with other embodiments described herein, the charging cable assembly 100 may include an arm which has at least two arm segments. Further, the charging cable assembly 100 may include at least one hinge element 132, so that the arm may be articulated so that the charging cable 110 may be easily positioned into a charging position near the electric vehicle being charged, or the charging cable 110 may be easily positioned into a storage position. By including at least two arm sections which are joined with at least one hinge element 132, the arm may be provided with more degrees of freedom so as to articulate into more convenient positions.

With a conventional construction, the arm 130 may form a rigid, hollow structure through which components may pass through. The charging cable 110 may, for example, pass through the arm 130 and continue to a charging station. However, in the present disclosure, for providing the electrical current to the conductors 114 of the charging cable 110, the arm 130 may include a plurality of busbars 134, and each one of the plurality of conductors 114 of the charging cable 110 are electrically connected to each respective one of the plurality of busbars 134. Since the arm 130 is rigid, and may be made to be electrically isolating, a significant length of the charging cable 110 can be replaced with low-resistance busbars 134 which generate significantly less heat at high current throughput, and consequently require no additional cooling. It follows that the thermal management unit 140 is only required to cool the significantly shorter charging cable 110 with a significantly shorter coolant circuit, which reduces flow losses compared to a longer coolant circuit and improves the efficiency of the thermal management unit 140, and may also allow the thermal management unit 140 to be made smaller.

According to embodiments, which may be combined with other embodiments described herein, the arm 130 may be configured to be mounted to a wall, a ceiling, or a charging station. Particularly, the fixed end portion 130a of the arm 130 may be configured to be mounted to a wall, a ceiling or a charging station. More particularly, the arm 130 may be configured to be mounted to a side surface or a top surface of a charging station. In the charging cable assembly 100 shown in Fig. 1, the charging cable assembly 100 is exemplarily shown as being attached to a horizontal surface, which would correspond to the top surface of a charging station in a typical installation. However, in cases where multiple charging cable assemblies 100 are installed for connecting to a consolidated, centralised charging station, the charging cable assembly 100 may be mounted to a wall or ceiling, with additional busbars and/or cables connecting the charging cable assembly 100 to the charging station.

In a typical installation, the arm 130 is installed at a height H above the ground, and the charging cable 110 attached thereto hangs from the arm 130. According to an embodiment, which may be combined with other embodiments described herein, the charging cable assembly 100 is positioned such that the arm 130 is at a height H from the ground, and the charging cable 110 has a length L which is less than the height H. Accordingly, when the charging cable 110 and charging connector 120 are not in use, the charging cable is not left to lay on the ground. The charging cable 110 and charging connector 120 are consequently less likely to be damaged by a vehicle driving over them, and is protected from impact damage from the charging cable 110 or charging connector 120 from hitting the ground after being dropped.

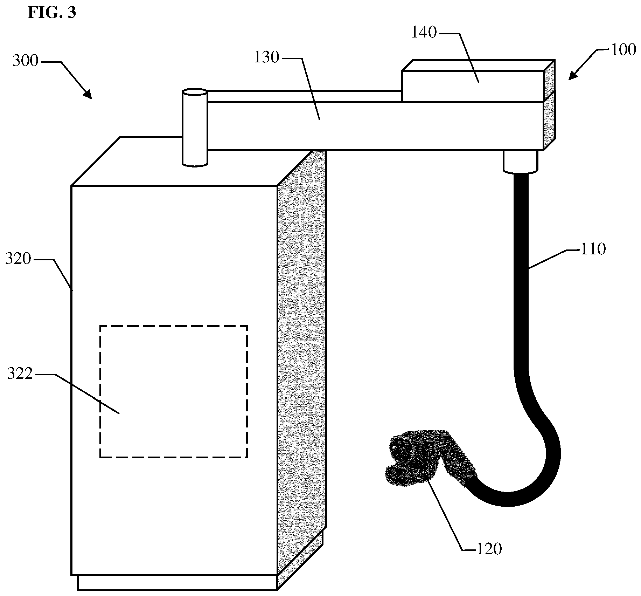

Referring now to Fig. 3, according to the second aspect of the present disclosure, an electric vehicle charging system 300 is provided. The electric vehicle charging system 300 includes a charging station 320 which includes an electric vehicle supply equipment (EVSE) apparatus 322, and a charging cable assembly 100 according to the first aspect of the present disclosure. The electric vehicle charging system 300, in simplest form, may consist of a charging station 320 with a charging cable assembly 100 mounted to the top surface, forming a self-contained electric vehicle charging system 300 having an articulated arm 130 and a liquid cooled charging cable 110 which is cooled by the arm-mounted thermal management unit 140.

The charging station 320 may consist of any appropriate charging station in the current state of the art, including AC and DC charging capabilities. The charging station 320 includes all necessary components for electric vehicle charging which includes, at a minimum, an electric vehicle supply equipment (EVSE) apparatus 322. However, preferably, the charging station 320 would be capable of supplying high current charging to an electric vehicle so as to take full advantage of the liquid-cooled charging cable assembly of the present disclosure. For example, the charging station 320 may consist of a Megawatt Charging System charging station from ABB E-mobility suitable for fast-charging of heavy commercial vehicles, which may include an EVSE 322 capable of providing a charging current of 1500 A, or even up to 3000 A. The charging cable assembly 100 attached to the electric vehicle charging system 300 provides efficient cooling of the charging cable 110 for high power applications.

Although various exemplary embodiments of the invention have been disclosed, it will be apparent to those skilled in the art that various changes and modifications can be made which will achieve some of the advantages of the invention without departing from the spirit and scope of the invention. It will be obvious to those reasonably skilled in the art that other components performing the same functions may be suitably substituted. It should be mentioned that features explained with reference to a specific figure may be combined with features of other figures, even in those cases in which this has not explicitly been mentioned.

Spatially relative terms such as "under", "below", "lower", "over", "upper" and the like are used for ease of description to explain the positioning of one element relative to a second element. These terms are intended to encompass different orientations of the device in addition to different orientations than those depicted in the figures. Further, terms such as "first", "second", and the like, are also used to describe various elements, regions, sections, etc. and are also not intended to be limiting. Like terms refer to like elements throughout the description.

As used herein, the terms "having", "containing", "including", "comprising" and the like are open ended terms that indicate the presence of stated elements or features, but do not preclude additional elements or features. The articles "a", "an" and "the" are intended to include the plural as well as the singular, unless the context clearly indicates otherwise.

With the above range of variations and applications in mind, it should be understood that the present invention is not limited by the foregoing description, nor is it limited by the accompanying drawings. Instead, the present invention is limited only by the following claims and their legal equivalents.

### Reference numbers

- 100: Charging cable assembly
- 110: Charging cable
- 110a: First end of the charging cable
- 110b: Second end of the charging cable
- 112: Outer insulation
- 114: Conductor
- 116: Coolant channel
- 116a: Outbound coolant channel
- 116b: Inbound coolant channel
- 118: Communication line
- 120: Charging connector
- 130: Arm
- 130a: Fixed end portion of the arm
- 130b: Free end portion of the arm
- 132: Hinge element
- 134: Busbar
- 140: Thermal management unit
- 300: Electric vehicle charging system
- 320: Charging station
- 322: EVSE apparatus
- H: Arm height
- L: Charging cable length

## Claims

1. A charging cable assembly (100) for charging an electric vehicle, the charging cable assembly (100) comprising:
an arm (130);
a charging cable (110) having a first end (110a) and a second end (110b), the charging cable (110) comprising a plurality of conductors (114) extending from the first end (110a) to the second end (110b) and a plurality of coolant channels (116) extending from the first end (110a) to the second end (110b), wherein the first end (110a) of the charging cable (110) is connected to the arm (130);
a charging connector (120) provided at the second end (110b) of the charging cable (110), the charging connector (120) being configured for electrically connecting the charging cable assembly (100) to an electric vehicle; and
a thermal management unit (140) mounted on the arm (130), the thermal management unit (140) being configured for cooling the charging cable (110) and/or the charging connector (120) by circulating coolant through the plurality of coolant channels (116).

2. The charging cable assembly (100) according to claim 1, wherein the arm (130) comprises a plurality of busbars (134), and each one of the plurality of conductors (114) of the charging cable (110) are electrically connected to each respective one of the plurality of busbars (134).

3. The charging cable assembly (100) according to any one of claims 1 to 2, wherein the arm (130) comprises a fixed end portion (130a) and a free end portion (130b).

4. The charging cable assembly (100) according to claim 3, wherein the thermal management unit (140) is mounted at the free end portion (130b) of the arm (130).

5. The charging cable assembly (100) according to any one of claims 3 to 4, wherein the first end (110a) of the charging cable (110) is connected to the arm (130) at the free end portion (130b).

6. The charging cable assembly (100) according to any one of claims 1 to 5, wherein the thermal management unit (140) comprises an active liquid cooling device.

7. The charging cable assembly (100) according to any one of claims 1 to 5, wherein the thermal management unit (140) comprises a vapour-compression refrigeration system.

8. The charging cable assembly (100) according to any one of claims 1 to 7, wherein the arm (130) is configured to be mounted to a wall, a ceiling, or a charging station.

9. The charging cable assembly (100) according to any one of claims 1 to 8, wherein the arm (130) comprises at least one hinge element (132).

10. The charging cable assembly (100) according to claim 9, wherein the arm (130) comprises at least two arm sections which are joined with the at least one hinge element (132).

11. The charging cable assembly (100) according to any one of claims 1 to 10, wherein the charging cable assembly (100) is positioned such that the arm (130) is at a height H from the ground, and the charging cable (110) has a length L which is less than the height H.

12. An electric vehicle charging system (300) comprising a charging station (320) comprising an electric vehicle supply equipment (EVSE) apparatus (322), and a charging cable assembly (100) according to any one of claims 1 to 11.

13. The electric vehicle charging system (300) according to claim 12, wherein the arm (130) is mounted to the charging station (320).
